# EUROPEAN PATENT SPECIFICATION

(11) **EP 4 112 029 B1**
(45) Date of publication and mention of the grant of the patent: **11.09.2024**
(21) Application number: 21183005.4
(22) Date of filing: 30.06.2021
(51) Int. Cl.: A61G 5/04, A61G 5/10, B60K 7/00, B60K 17/04

(54) **HUBLESS DRIVE MODULE AND ELECTRIC WHEELCHAIR USING SUCH MODULE**
NABENLOSES ANTRIEBSMODUL UND ELEKTRISCHER ROLLSTUHL MIT EINEM SOLCHEN MODUL
MODULE D'ENTRAÎNEMENT SANS MOYEU ET FAUTEUIL ROULANT ÉLECTRIQUE UTILISANT UN TEL MODULE

(43) Date of publication of application: 04.01.2023
(73) Proprietor: COSMOTECH Sp. z o.o., 43-195 Mikolow (PL)
(72) Inventor: PADJASEK, Lukasz, 43-190 Mikolów (PL); STRYCHARZ, Arkadiusz, 40-748 Katowice (PL); WILK, Dariusz, 40-748 Katowice (PL); SOSNOWSKI, Michal, 40-748 Katowice (PL)
(74) Representative: JD&P Patent Attorneys Joanna Dargiewicz & Partners

(56) References cited:
- CN-A- 112 585 842

## Description

The subject of the invention is a hubless drive module for mechanical vehicles, in particular for a wheelchair, and a wheelchair using such a module.

There are various wheelchairs known, both with a mechanical/manual drive and with an electric drive. Many of them are equipped with seat level adjustment mechanisms. For example, the American patent publication US4527829 discloses a foldable wheelchair using piston-cylinder type hydraulic drives to lift the seat. The British patent publication GB2412306 discloses an engine vehicle with a seat level adjustment function, also using hydraulic piston-cylinder type drives. The NL8701561 document discloses a wheelchair, in which the seat level adjustment is performed continuously, using a regulated bar supporting the seat and the backrest. The Chinese disclosure CN212879868 of a utility model discloses a wheelchair using an X-type frame (a scissor mechanism) under the seat. The wheelchair described in the Indian patent application IN 202121016926 executes adjustment of the seat level with the backrest using four actuators, enabling any tilt of the seat plane in relation to the platform with wheels. The WO19030778 document discloses an electric wheelchair, which uses two wheels with (driving) axles and a third, idle wheel providing a stabilising function.

Use of a hubless wheel in a wheelchair is described in the patent publication GB2043554. This document discloses a wheel driven by a friction-based drive element or by a meshing between a pinion and an internal gear integrated into the driven wheel. The patent application WO9426227 discloses a manual wheelchair equipped with hubless wheels, which offers the ability to tilt the seat, installed in grooves of the wheel rims.

Chinese patent application CN112585842 discloses a rolling device adapted to roll on a ground surface. The device includes at least one motorized wheel including a circular stator and a circulator rotor. The stator may include a circular slot and a plurality of electromagnetic coils located in the circular slot so that at least two electromagnetic coils are arranged facing one another. The circular motor may include a circular strip having side walls and a free end edge connecting the side walls, as well as a contact surface with the ground, the circular strip including magnetic elements arranged on the side walls thereof. The circular rotor and the circulator stator may be assembled by means of assembly means provided on the circular stator.

Demand for new drive mechanisms offering additional functionalities of mechanical vehicles, such as the ability of easy adjustment of the seat/platform level still exists in the field.

Thus, the objective of the invention was to develop such a drive module for personal mobility vehicles, which enables easy seat/platform level adjustments, while decreasing the weight of the vehicle.

This objective has been implemented using a hubless drive module with an integrated seat/platform level mechanism, including shock absorption functionality, as well as by an electric wheelchair using such a module.

Thus, the subject of the invention is a hubless drive module including a rim with an inner driving-guiding race and a tyre on the outer side of the rim, installed rotatably on a main bearing panel and a drive motor with a power transmission system onto the driving race and a control module, characterised in that the hubless drive module includes a platform adjustment mechanism installed rotatably inside the rim and connected with the main bearing panel, wherein the platform level adjustment mechanism includes a top driven module and a bottom driven module connected using at least one guide, a screw unit located between the top driven module and the bottom driven module, provided with a cushioned mechanism is for connecting with the platform, a motor of the platform level adjustment mechanism and a threaded bar driven into rotation by the motor of the platform level adjustment mechanism, wherein the cushioned mechanism for connecting with the platform includes a platform fixture, a base and a shock absorbing element connecting the platform fixture and the base, and the platform fixture and the base may move along the guide and the base is connected with the threaded bar using a corresponding inner thread, ensuring base movement occurring together with rotation of the threaded bar, thus executing the platform level adjustment.

The main bearing panel is preferably equipped with at least one roller moving along the inner driving-guiding race.

The main top driven panel and/or the bottom driven is preferably equipped with at least one roller moving along the inner driving-guiding race.

The shock absorbing element is preferably provided as a spring, an elastomeric element or a pneumatic/oil shock absorber.

The hubless drive module preferably also includes a battery module.

The subject of the invention also includes a wheelchair with a seat and at least one passive wheel, and also includes the hubless drive module described above, wherein the seat comprises the platform.

The wheelchair is preferably equipped with at least one anti-tilt module.

The subject of the invention is presented in embodiments in the figures, where:
Fig. 1 schematically presents a hubless drive module with a platform/seat position adjustment module and shock absorption and a drive module according to the invention, viewed from the inside;
Fig. 2 schematically presents a hubless drive module with a platform/seat position adjustment module and shock absorption and a drive module according to the invention, viewed from the outside;
Fig. 3 schematically presents the cushioned platform/seat level adjustment mechanism according to the invention, viewed as a side projection;
Fig. 4 schematically presents a cross-section through the top part of the cushioned platform/seat level adjustment mechanism according to the invention;
Fig. 5 schematically presents a cross-section through the middle part of the cushioned platform/seat level adjustment mechanism according to the invention;
Fig. 6 schematically presents a cross-section through the bottom part of the cushioned platform/seat level adjustment mechanism according to the invention;
Fig. 7 schematically presents a hubless drive module with a platform/seat position adjustment mechanism and shock absorption and a drive system according to the invention, in a general view;
Fig. 8 schematically presents a perspective view of the electric wheelchair according to the invention;
Fig. 9 schematically presents a side view of the electric wheelchair according to the invention;
Fig. 10 schematically presents an alternative, cushioned platform/seat level adjustment mechanism according to the invention;
Fig. 11 schematically presents an alternative, rolling platform/seat level adjustment mechanism - a cross-section in the axis of stabilising rollers.

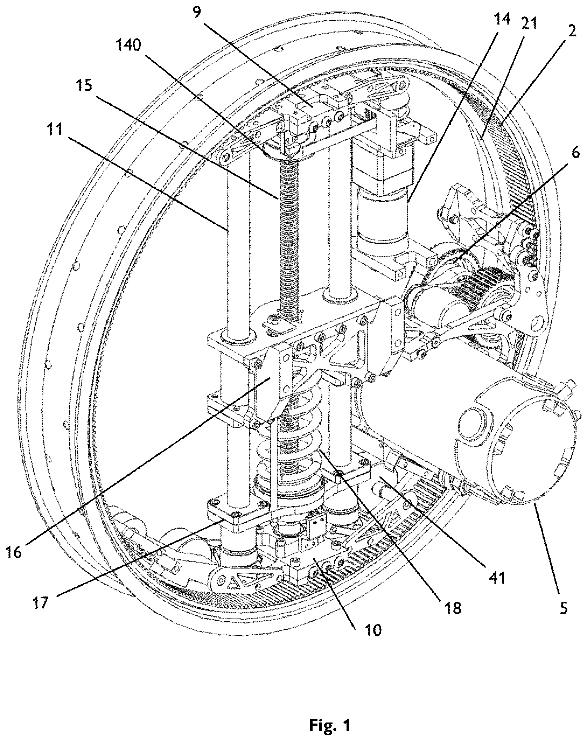

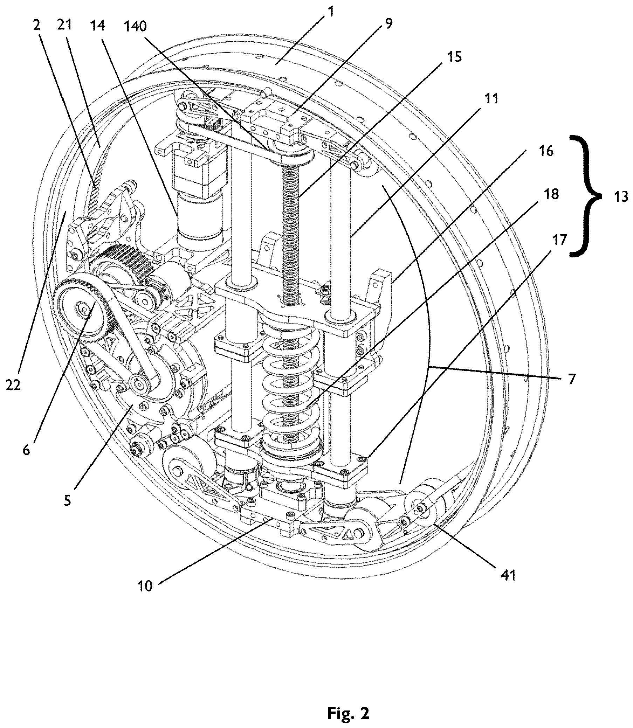

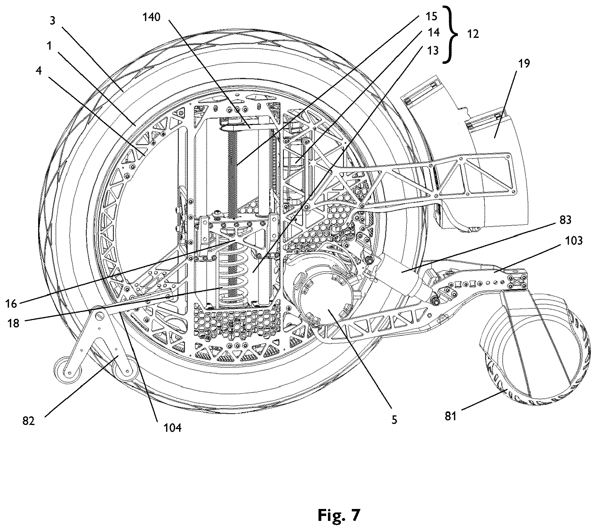

Fig. 1-2 and 7 schematically present the hubless drive module according to the invention, including a rim (1) with an internal driving-guiding race (2) and a tyre (3) (only fig. 7), which may be tubeless, installed rotatably on the outer side of the rim (1) using a set of rollers stabilising the system in the middle of the rim (1) and in the wheel axis, on the main bearing panel (4) (only fig. 7), enabling mutual rotation of the rim (1) and of the main panel (4). The inner side of the rim (1) is also defined as the driving-guiding race preferably consists of 3 areas:
   - the guiding race, to which the toothed belt is attached,
   - a stabilising fin (21), ensuring fixed position within the wheel axis through cooperation with rollers attached to side sheets of the wheel forming the main bearing panel (4), retaining all elements of the mechanisms inside the wheel,
   - a race (22), on which rollers attached to side sheets of the wheel ensure central (axial) position of the sheet in the wheel.

The main bearing panel (4) preferably consists of two closing sheets (side sheets) connected together using bolts, rivets or other fixtures, through stiffening elements and stiffening elements with installed rollers cooperating with the race (22) guiding the wheel and with the guiding fin (21). The hubless drive module also contains a drive motor (5) and a mechanism (7) adjusting the level of the platform (8) containing the cushioning, installed rotatably inside the rim (1) and connected to the top bearing panel (4). The motor (14) of the mechanism (7) adjusting the level of the platform (8)/seat (80) drives the threaded bar (15) into rotation using the transmission (140) of the screw (15) drive. The mechanism (7) is attached to side sheets, described herein as the main bearing panel (4). In order to optimise the force distribution in the system at its ends, guiding roller sets are installed at its ends, stabilising the system in the rim (1), both centrally and within the wheel axle. The drive module according to the invention additionally includes a battery module (19).

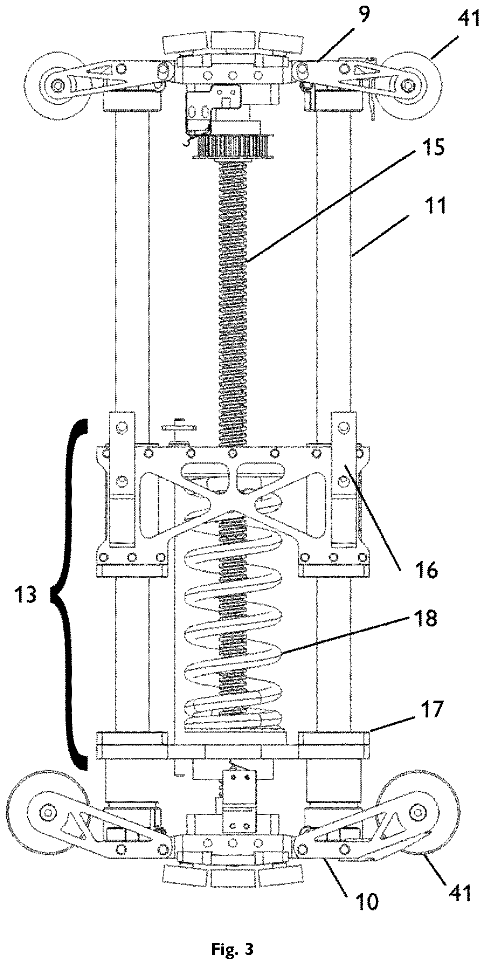

Fig. 3 schematically presents the mechanism (7) adjusting the level of the platform (8)/seat (80), which includes the top driven module (9) and the bottom driven module (10), also responsible for mechanism stabilisation in the rim (1) as a part of the stabilising system, connected together using at least one guide (11), a screw system (12) located between the top driven module (9) and the bottom driven module (10), equipped with a cushioned mechanism (13) connecting with the platform (8)/seat (80), a motor (14) (not shown in Fig. 3, visible in Fig. 1-2) of the mechanism (7) adjusting the level of the platform (8) and a threaded bar (15) in the form of a trapezoidal screw, driven into rotation by the motor (14). The cushioned mechanism (13) connecting with the platform (8)/seat (80) includes a fixture (16) of the platform (8) and the base (17), as well as a cushioning element (18) connecting the fixture (16) of the platform (8) and the base (17). The cushioning element (18) is preferably provided as a spring. The fixture (16) of the platform (8) and the base (16) may move along the guide (11) and the base (17) is connected to the threaded bar (15) via the corresponding, internal thread, ensuring movement of the base (17) occurring together with rotation of the threaded bar (15), thus adjusting the level of the platform (8)/seat (80).

The top driven module (9) and/or the bottom driven module (10) is preferably equipped with at least one roller (41) moving along the inner driving-guiding race (2).

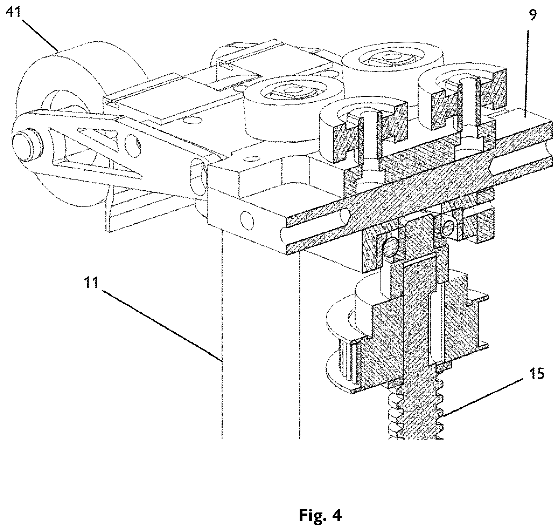

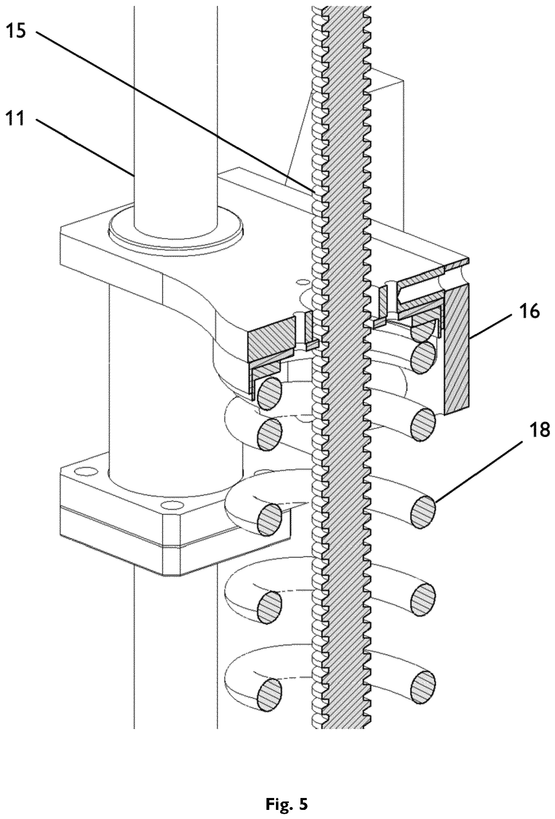

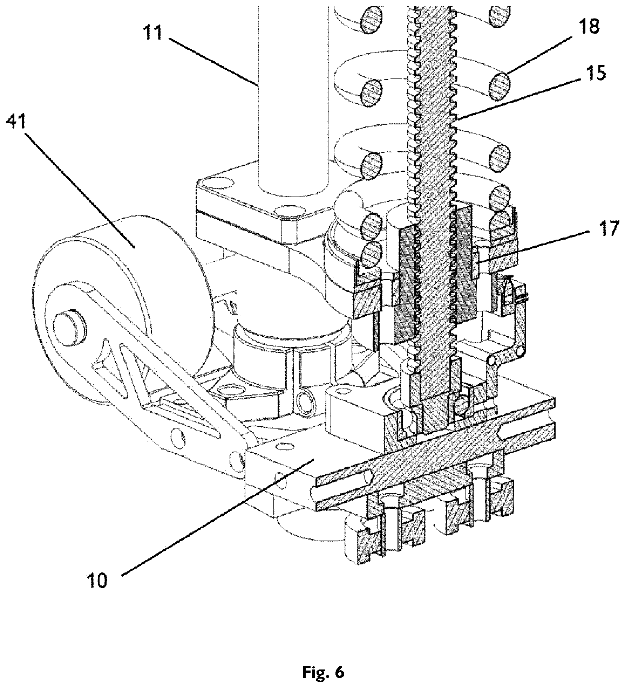

Fig. 4-6 presents cross-sections through the top, middle and bottom parts of the mechanism (7) adjusting the level of the platform (8)/seat (80).

Fig. 7 schematically presents a hubless drive module with a platform/seat position adjustment mechanism and shock absorption and a drive system according to the invention, in a general view, equipped with an anti-tilt module (82) including anti-tilt wheels, connected with the main bearing panel (4) using a connecting element (104). The drive module also includes a rear, driven wheel (81) with a shock absorber (83) of the passive wheel, connected with the drive module using a suspension arm (103). The drive module is also equipped with a battery module (19). The screw module (12) includes the screw (15) with a motor (14) and a cushioned mechanism (13) connecting with the platform (8), not shown.

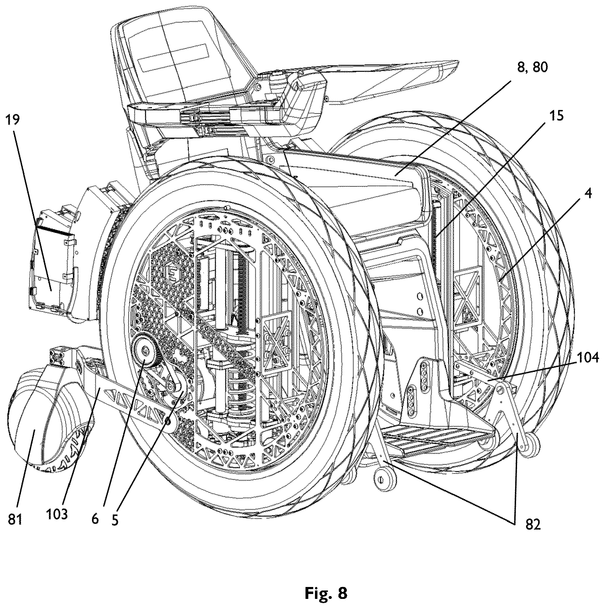

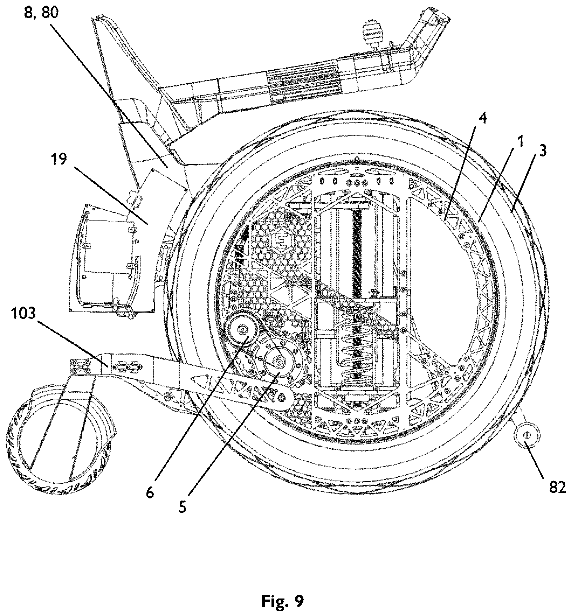

Fig. 8 and 9 schematically present the wheelchair according to the invention. The wheelchair has a seat (80), two small rear driven wheels (81) with shock absorbers (83) of driven wheels (81) and a hub-free drive module described above. The main bearing panel (4) is equipped with at least one roller moving along the inner driving-guiding race (2). The wheelchair is also equipped with two anti-tilt modules (82). The drive motor (5) is connected with the driving race (2) using a power transmission system (6). The battery module (19) is also shown.

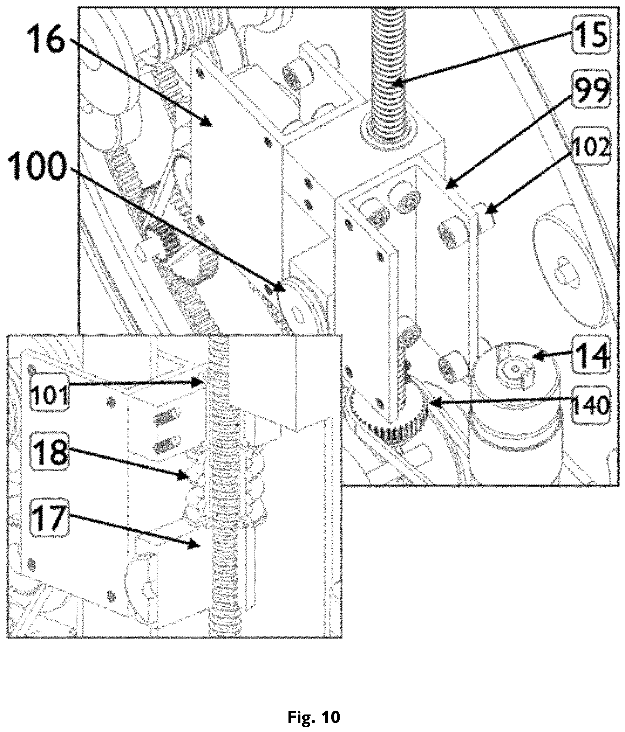

The races (11) may be formed as bars (Fig. 1-9) or an open profile (Fig. 10-11).

The anti-tilt module (82) containing anti-tilt wheels is connected with the main bearing panel (4) via a connecting element (104), for example a pin. The anti-tilt module (82) may be additionally provided with a mechanism allowing it to hide within the outline of the driving wheel if an obstacle is crossed and to return to the working position once the obstacle is overcome.

Fig. 10 presents an alternative execution of the mechanism (7) adjusting the level of the platform (8)/seat (80). The mechanism (7) includes a bolt (15) of the seat level adjustment mechanism (7), the bearing profile of stabilising rollers (99) which moves along the guide (11) using stabilising rollers (102). The mechanism (7) also includes the motor (14) of the mechanism (7) adjusting the level of the platform (8)/seat (80), which drives the threaded bar (15) using the transmission (140) of the screw (15) drive. The figure also shows the attachment surface of the fixture (16) of the platform (8)/seat (80), which includes a sliding bushing (101) of the shock absorbing module, through which the screw (15) is passing.

The base (17) is provided with a leveling roller (100), and the shock absorber (18) in the form of a spring connects the base (17) with the fixture (16).

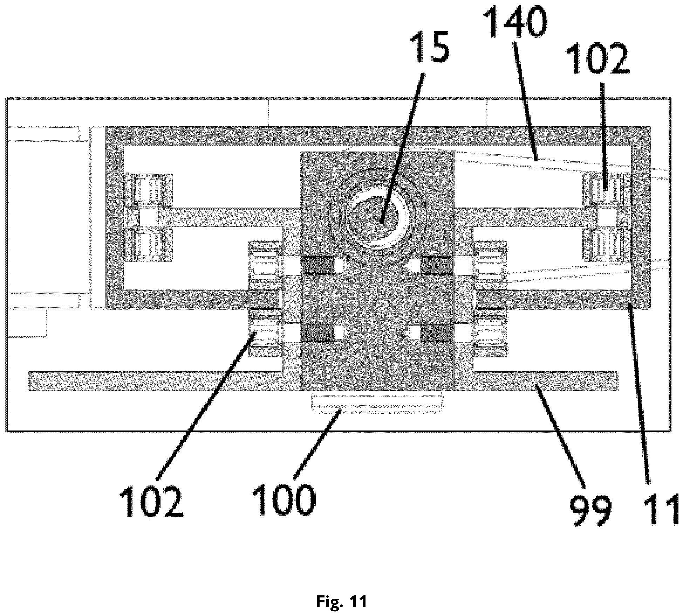

Fig. 11 schematically presents an alternative rolling mechanism (7) adjusting the level of the platform (8)/seat (80) - a cross-section through the axis of stabilising rollers with a single guide (11), in which the guide (11) has the form of an open profile.

The subject of the invention is a hubless drive module for mechanical vehicles, in particular for electric mobility devices, electric wheelchairs, as well as autonomous pallets, other personal mobility vehicles, such as scooters and all-terrain vehicles. The hubless drive module according to the invention is equipped with an integrated mechanism adjusting the level of the seat (in the case of wheelchairs) or of a platform (in the case of scooters or autonomous pallets).

Additionally, the mechanism adjusting the seat level is provided with a springing/shock absorbing mechanism, which may be a spring, an elastomer or a pneumatic/oil shock absorber.

The subject of the invention also includes an electric, four-wheel wheelchair using the aforementioned hubless drive module provided with an integrated seat level adjustment mechanism with a shock absorbing spring. The wheelchair according to the invention is intended for persons with mobility problems and is characterised by large, front hubless driving wheels and two smaller, stabilising driven wheels. The vehicle also has a screw-rail mechanism for adjustment of the seat level, using space created thanks to the use of the hubless design of the driving wheels. The wheelchair is intended for travelling in urban environments, with the ability to move freely also indoors, and, to a lesser extent, on unpaved surfaces. The wheelchair is characterised by a better seat level adjustment, more efficient shock absorption properties and a significantly lower weight compared to the known, electric wheelchairs. This is a result not only of the hubless wheel design, but mainly of the use of carbon-based structural materials, much lighter compared to typical, metallic materials. The frame, the leg supports, the backrest and the seat are made of carbon-based laminate, fabricated using the "sandwich" lamination technology involving polyurethane foam. The armrests are fabricated using the proprietary FDM (Fused Deposition Modelling) method, by wrapping a printed material with a carbon thread pre-saturated with an epoxy resin. Housings of the control system and wheel shields are made using an incremental FDM technology.

### Reference numerals

1. rim
2. driving-guiding race
3. tyre
4. main bearing panel
5. drive motor
6. power transmission system
7. platform level adjustment mechanism
8. platform
9. top driven module
10. bottom driven module
11. guide
12. screw unit
13. cushioned mechanism connecting with the platform/seat
14. drive of the platform/seat level adjustment mechanism
15. threaded bar, screw
16. platform fixture
17. base
18. shock absorbing element
19. battery module
21. stabilising fin
22. race
41. roller
80. seat
81. driven wheel
82. anti-tilt module
83. driven wheel shock absorber
99. bearing profile of stabilising rollers
100. levelling roller
101. sliding bushing
102. stabilising roller
103. suspension arm
104. connecting element
140. bolt drive transmission system.

## Claims

1. A hubless drive module including a rim (1) with an inner driving-guiding race (2) and a tyre (3) on the outer side of the rim (1), installed rotatably on a main bearing panel (4) and a drive motor (5) with a power transmission system (6) transmitting power onto the driving-guiding race (2) and a control module, wherein the hubless drive module includes a platform level adjustment mechanism (7) installed rotatably inside the rim (1) and connected with the main bearing panel (4), wherein the platform level adjustment mechanism (7) includes a top driven module (9) and a bottom driven module (10) connected using at least one guide (11), a screw unit (12) located between the top driven module (9) and the bottom driven module (10), provided with a cushioned mechanism (13) for connecting with a platform (8), a motor of the platform level adjustment mechanism (14) and a threaded bar (15) driven into rotation by the motor of the platform level adjustment mechanism (14), wherein the cushioned mechanism (13) for connecting with the platform (8) includes a platform fixture (16), a base (17) and a shock absorbing element (18) connecting the platform fixture (16) and the base (17), and the platform fixture (16) and the base (17) may move along the guide (11) and the base (17) is connected with the threaded bar (15) using a corresponding inner thread, ensuring base (17) movement occurring together with rotation of the threaded bar (15), to execute the platform (8) level adjustment.

2. A hubless drive module according to Claim 1, **characterised in that** the main bearing panel (4) is equipped with at least one roller moving along the inner driving-guiding race (2).

3. A hubless drive module according to Claim 1 or Claim 2, **characterised in that** the top driven module (9) and/or the bottom driven module (10) is equipped with at least one roller (41) moving along the inner driving-guiding race (2).

4. A hubless drive module according to Claim 1 or Claim 2 or Claim 3, **characterised in that** the shock absorbing element (18) is provided as a spring, an elastomeric element or a pneumatic/oil shock absorber.

5. A hubless drive module according to any of the Claims 1-4, **characterised in that** it also includes a battery module (19).

6. A wheelchair including a seat (80) and at least one driven wheel (81), **characterised in that** it also includes a hubless drive module described in any of the Claims 1-5, wherein the platform (8) comprises the seat (80).

7. A wheelchair according to Claim 6, **characterised in that** it additionally contains at least one anti-tilt module (82).

## Patentansprüche

1. Nabenloses Antriebsmodul, das eine Felge (1) mit einem inneren Antriebsführungsring (2) und einem Reifen (3) auf der Außenseite der Felge (1), die drehbar auf einer Hauptlagerplatte (4) installiert ist, und einen Antriebsmotor (5) mit einem Kraftübertragungssystem (6), das Kraft auf den Antriebsführungsring (2) überträgt, und ein Steuermodul aufweist, wobei das nabenlose Antriebsmodul einen Plattformniveau-Anpassmechanismus (7) aufweist, der drehbar im Inneren der Felge (1) installiert ist und der mit der Hauptlagerplatte (4) verbunden ist, wobei der Plattformniveau-Anpassmechanismus (7) ein oberes angetriebenes Modul (9) und ein unteres angetriebenes Modul (10), die unter Verwendung von wenigstens einer Führung (11) verbunden sind, eine sich zwischen dem oberen angetriebenen Modul (9) und dem unteren angetriebenen Modul (10) befindende Schraubeinheit (12), die mit einem gefederten Mechanismus (13) zum Verbinden mit einer Plattform (8) versehen ist, einen Motor des Plattformniveau-Anpassmechanismus (14) und eine Gewindestange (15), die durch den Motor des Plattformniveau-Anpassmechanismus (14) in Drehung angetrieben wird, aufweist,
wobei der gefederte Mechanismus (13) zum Verbinden mit der Plattform (8) eine Plattformbefestigung (16), eine Basis (17) und ein schockabsorbierendes Element (18) aufweist, das die Plattformbefestigung (16) und die Basis (17) verbindet, und sich die Plattformbefestigung (16) und die Basis (17) entlang der Führung (11) bewegen können und die Basis (17) mit der Gewindestange (15) unter Verwendung eines entsprechenden Innengewindes verbunden ist, welches eine Basis (17)-Bewegung sicherstellt, die zusammen mit einer Drehung der Gewindestange (15) zum Ausführen der Plattform (8)-Niveau-Anpassung erfolgt.

2. Nabenloses Antriebsmodul nach Anspruch 1, **dadurch gekennzeichnet, dass** die Hauptlagerplatte (4) mit wenigstens einer Laufrolle ausgestattet ist, die sich entlang des inneren Antriebsführungsrings (2) bewegt.

3. Nabenloses Antriebsmodul nach Anspruch 1 oder Anspruch 2, **dadurch gekennzeichnet, dass** das obere angetriebene Modul (9) und/oder das untere angetriebene Modul (10) mit wenigstens einer Laufrolle (41) ausgestattet ist, die sich entlang des inneren Antriebsführungsrings (2) bewegt.

4. Nabenloses Antriebsmodul nach Anspruch 1 oder Anspruch 2 oder Anspruch 3, **dadurch gekennzeichnet, dass** das schockabsorbierende Element (18) als eine Feder, ein Elastomerelement oder ein Pneumatik-/Öl-Schock-Absorber vorgesehen ist.

5. Nabenloses Antriebsmodul nach einem der Ansprüche 1-4, **dadurch gekennzeichnet, dass** es auch ein Batteriemodul (19) aufweist.

6. Rollstuhl, enthaltend einen Sitz (80) und wenigstens ein angetriebenes Rad (81), **dadurch gekennzeichnet, dass** er auch ein nabenloses Antriebsmodul aufweist, das in einem der Ansprüche 1-5 beschrieben ist, wobei die Plattform (8) den Sitz (80) aufweist.

7. Rollstuhl nach Anspruch 6, **dadurch gekennzeichnet, dass** er zusätzlich wenigstens ein Kippschutzmodul (82) aufweist.

## Revendications

1. Module d'entraînement sans moyeu comportant une jante (1) avec une bague intérieure de guidage (2) et un pneu (3) sur le côté extérieur de la jante (1), installé de manière rotative sur un panneau de support principal (4) et un moteur d'entraînement (5) avec un système de transmission de puissance (6) transmettant la puissance à la bague de guidage (2) et un module de commande, dans lequel le module d'entraînement sans moyeu comporte un mécanisme de réglage du niveau de la plate-forme (7) installé de manière rotative à l'intérieur de la jante (1) et relié au panneau de support principal (4), dans lequel le mécanisme de réglage du niveau de la plate-forme (7) comporte un module supérieur entraîné (9) et un module inférieur entraîné (10) reliés à l'aide au moins d'un guide (11), une unité de vis (12) située entre le module supérieur entraîné (9) et le module inférieur entraîné (10), muni d'un mécanisme amorti (13) pour la liaison avec une plate-forme (8), un moteur du mécanisme de réglage du niveau de la plate-forme (14) et une barre filetée (15) entraînée en rotation par le moteur du mécanisme de réglage du niveau de la plate-forme (14), dans lequel le mécanisme amorti (13) pour la liaison avec la plate-forme (8) comporte un dispositif de fixation de la plate-forme (16), une base (17) et un élément d'absorption des chocs (18) reliant le dispositif de fixation de la plate-forme (16) et la base (17), et le dispositif de fixation de la plate-forme (16) et la base (17) peuvent se déplacer le long du guide (11) et la base (17) est reliée à la barre filetée (15) à l'aide d'un filetage intérieur correspondant, assurant le mouvement de la base (17) se produisant en même temps que la rotation de la barre filetée (15), afin d'effectuer le réglage du niveau de la plate-forme (8).

2. Module d'entraînement sans moyeu selon la revendication 1, **caractérisé en ce** le panneau de roulement principal (4) est équipé d'au moins un rouleau se déplaçant le long de la bague intérieure de guidage (2).

3. Module d'entraînement sans moyeu selon la revendication 1 ou la revendication 2, **caractérisé en ce que** le module supérieur entraîné (9) et/ou le module inférieur entraîné (10) est équipé d'au moins un rouleau (41) se déplaçant le long de la bague intérieure de guidage (2).

4. Module d'entraînement sans moyeu selon la revendication 1 ou la revendication 2 ou la revendication 3, **caractérisé en ce que** l'élément d'absorption des chocs (18) est fourni sous la forme d'un ressort, d'un élément élastomère ou d'un amortisseur de chocs pneumatique/à huile.

5. Module d'entraînement sans moyeu selon l'une quelconque des revendications 1-4, **caractérisé en ce qu'**il comporte également un module de batterie (19).

6. Fauteuil roulant comportant un siège (80) et au moins une roue motrice (81), **caractérisé en ce qu'**il comporte également un module d'entraînement sans moyeu selon l'une quelconque des revendications 1-5, dans lequel la plate-forme (8) comprend le siège (80).

7. Fauteuil roulant selon la revendication 6, **caractérisé en ce qu'**il contient en outre au moins un module anti-basculement (82).
